# EUROPEAN PATENT APPLICATION

(11) **EP 3 261 023 A1**
(43) Date of publication of application: **27.12.2017**
(21) Application number: 16863457.4
(22) Date of filing: 23.08.2016
(51) Int. Cl.: G06K 9/62

(54) **METHOD, APPARATUS AND TERMINAL DEVICE FOR FINGERPRINT IDENTIFICATION**

(30) Priority: 13.11.2015 CN 201510786336
(71) Applicant: Guangdong Oppo Mobile Telecommunications Corp., Ltd., Dongguan, Guangdong 523860 (CN)
(72) Inventor: ZHOU, Yibao, Dongguan Guangdong 523860 (CN)
(74) Representative: Petraz, Gilberto Luigi
(86) International application number: PCT/CN2016/096306
(87) International publication number: WO 2017/080279

(57) **Abstract**

A method of recognizing fingerprints, an apparatus and a terminal device are provided. The method of recognizing fingerprints includes following operations. A fingerprint image is acquired and the fingerprint image matches with pre-stored fingerprint templates. The fingerprint image is divided into a plurality of pixel regions if the fingerprint image matches with the at least one of pre-stored fingerprint templates. A number of the pixel regions having white points is computed to determine whether the fingerprint image is successfully recognized. The method of recognizing fingerprints determines whether the fingerprint image is a false fingerprint to improve fingerprint recognition accuracy. Therefore, the fingerprint recognition of the present disclosure satisfies usage convenience and provides fingerprint password security for users.

## Description

### CROSS REFERENCE TO RELATED APPLICATIONS

This application claims the priority to Chinese Patent Application No. 201510786336.X, filed on November 13, 2015 and entitled "METHOD OF RECOGNIZING FINGERPRINTS, APPARATUS AND TERMINAL DEVICES," applied by GUANGDONG OPPO MOBILE TELECOMMUNICATIONS CORP., LTD. The entire disclosures of the above applications are incorporated herein by reference.

### BACKGROUND

### Field

The present disclosure relates to a technical field of fingerprint recognition, and more particularly relates to methods of recognizing fingerprints, apparatuses and terminal devices, and methods of recognizing false fingerprints, apparatus and terminal devices.

### Background

Because fingerprints are invariant over life, unique, and are convenient, fingerprints have become an important part of user identity recognition. Fingerprint recognition technology now has been a standard function in most mobile terminals. Fingerprint recognition is used not only to unlock and awaken mobile terminals, but also plays an important role in mobile payment procedures. Therefore, there is a need for fingerprint recognition to satisfy usage convenience, and meanwhile, to provide security requirements for users.

In real life, user fingerprints may also be counterfeit. A high quality false fingerprint can be made by melting a material made of silica gel onto a reserved fingerprint mold (e.g., modeling clay or an adhesive tape). Therefore, one problem to be solved is that how to correctly recognize fingerprints, and how to ensure security of fingerprint when correct fingerprint recognition is achieved.

### SUMMARY OF THE DISCLOSURE

Based on the above-mentioned drawbacks, a first objective of the present disclosure is to provide a method of recognizing false fingerprints that determines whether the fingerprint image is a false fingerprint to improve fingerprint recognition accuracy. Therefore, the fingerprint recognition of the present disclosure satisfies usage convenience and provides fingerprint password security for the user.

A second objective of the present disclosure is to provide an apparatus of recognizing fingerprints.

A third objective of the present disclosure is to provide a terminal device.

A fourth objective of the present disclosure is to provide a method of recognizing false fingerprints.

A fifth objective of the present disclosure is to provide an apparatus of recognizing false fingerprints.

A sixth objective of the present disclosure is to provide a terminal device.

A seventh objective of the present disclosure is to provide a non-volatile computer storage media.

An eighth objective of the present disclosure is to provide a non-volatile computer storage media.

A ninth objective of the present disclosure is to provide a terminal device.

A tenth objective of the present disclosure is to provide a terminal device.

In order to achieve the above-mentioned objectives, an embodiment of a first aspect of the present disclosure provides a method of recognizing fingerprints. The method includes: acquiring a fingerprint image; matching the fingerprint image with pre-stored fingerprint templates; dividing the fingerprint image into a plurality of pixel regions if the fingerprint image matches with at least one of the pre-stored fingerprint templates; and computing a number of the pixel regions having white points and determining whether the fingerprint image is successfully recognized or not according to the number of the pixel regions having white points.

In an embodiment of the present disclosure, determining whether the fingerprint image is successfully recognized or not according to the number of the pixel regions having white points includes determining whether the number of the pixel regions having white points is greater than a preset threshold, and determining that the fingerprint image is successfully recognized if the number of the pixel regions having the white points is less than the preset threshold.

In an embodiment of the present disclosure, after determining whether a number of the pixel regions having white points is greater than a preset threshold, the method further includes determining that a recognition of the fingerprint image fails if the number of the pixel regions having white points is greater than or equal to the preset threshold.

In an embodiment of the present disclosure, matching the fingerprint image with the pre-stored fingerprint templates includes extracting a plurality of fingerprint features of the fingerprint image, and matching the fingerprint features of the fingerprint image with a plurality of fingerprint features of the pre-stored fingerprint templates; the fingerprint image matching with the pre-stored fingerprint templates includes: if a number of the fingerprint features of the fingerprint image that matches with the fingerprint features of the pre-stored fingerprint templates is greater than or equal to a preset threshold, the fingerprint image being determined to match with the pre-stored fingerprint templates.

In an embodiment of the present disclosure, determining that the fingerprint image recognition fails if the number of the fingerprint features of the fingerprint image that matches with the fingerprint features of the pre-stored fingerprint templates is greater than or equal to the preset threshold.

In an embodiment of the present disclosure, a method of recognizing fingerprints is performed to match an acquired fingerprint image with the pre-stored fingerprint templates in the terminal device. If the fingerprint image matches with at least one of the pre-stored fingerprint templates, the fingerprint image is divided into pixel regions. A number of the pixel regions having white points are computed to determine whether the fingerprint image is a false fingerprint to improve fingerprint recognition accuracy. Therefore, the fingerprint recognition of the present disclosure satisfies usage convenience and provides fingerprint password security for the user.

In order to achieve the above-mentioned objectives, an embodiment of a second aspect of the present disclosure provides an apparatus of recognizing fingerprints, the apparatus includes: an acquisition unit configured to acquire a fingerprint image; a match unit configured to match the fingerprint image with pre-stored fingerprint templates; a division unit configured to divide the fingerprint image into a plurality of pixel regions if the fingerprint image matches with at least one of the pre-stored fingerprint templates; and a computation unit configured to compute a number of the pixel regions having white points and determine whether the fingerprint image is successfully recognized or not.

In an embodiment of the present disclosure, the computation unit is configured to: determine whether a number of the pixel regions having white points is greater than a preset threshold; and determine that the fingerprint image is successfully recognized if the number of the pixel regions having the white points is less than the preset threshold.

In an embodiment of the present disclosure, the computation unit is further configured to: determine that recognition of the fingerprint image fails if the number of the pixel regions having white points is greater than or equal to the preset threshold.

In an embodiment of the present disclosure, the match unit is configured to: extract a plurality of fingerprint features of the fingerprint image, and match the fingerprint features of the fingerprint image with a plurality of fingerprint features of the pre-stored fingerprint templates; and match the fingerprint image matches with the pre-stored fingerprint templates if a number of the fingerprint features of the fingerprint image that matches with the fingerprint features of the pre-stored fingerprint templates is greater than or equal to a preset threshold.

In an embodiment of the present disclosure, the match unit is further configured to determine that the fingerprint image recognition fails if the number of the fingerprint features of the fingerprint image that matches with the fingerprint features of at least one of the pre-stored fingerprint templates is less than the preset threshold.

In an embodiment of the present disclosure, an apparatus of recognizing fingerprints is configured to match an acquired fingerprint image with the pre-stored fingerprint templates in the terminal device. If the fingerprint image matches with at least one of the pre-stored fingerprint templates, the fingerprint image is divided into pixel regions. A number of the pixel regions having white points are computed to determine whether the fingerprint image is a false fingerprint, so as to improve fingerprint recognition accuracy. Therefore, the fingerprint recognition of the present disclosure satisfies usage convenience and provides fingerprint password security for the user.

In order to achieve the above-mentioned objectives, an embodiment of a third aspect of the present disclosure provides a terminal device.

The terminal device according to an embodiment of the present disclosure is configured to match an acquired fingerprint image with the pre-stored fingerprint templates in the terminal device. If the fingerprint image matches with at least one of the pre-stored fingerprint templates, the fingerprint image is divided into pixel regions. A number of the pixel regions having white points are computed to determine whether the fingerprint image is a false fingerprint, so as to improve fingerprint recognition accuracy. Therefore, the fingerprint recognition of the present disclosure satisfies usage convenience and provides fingerprint password security for the user.

In order to achieve the above-mentioned objectives, an embodiment of a fourth aspect of the present disclosure provides a method of recognizing false fingerprints. The method includes: acquiring a fingerprint image; dividing the fingerprint image into a plurality of pixel regions; and computing a number of the pixel regions having white points and if the number of the pixel regions having the white points is either greater than or equal to the preset threshold, determining that the fingerprint image is a false fingerprint.

In an embodiment of the present disclosure, detecting a number of the pixel regions having white points further includes determining that the fingerprint image is a true fingerprint if the number of the pixel regions having the white points is less than the preset threshold.

In an embodiment of the present disclosure, a method of recognizing false fingerprints, the fingerprint image is divided into pixel regions. A number of the pixel regions having white points are computed to determine whether the fingerprint image is a false fingerprint, so as to improve fingerprint recognition accuracy. Therefore, the fingerprint recognition of the present disclosure satisfies usage convenience and provides fingerprint password security for the user.

In order to achieve the above-mentioned objectives, an embodiment of a fifth aspect of the present disclosure provides an apparatus of recognizing false fingerprints. The apparatus includes: an acquisition unit configured to acquire a fingerprint image; a division unit configured to divide the fingerprint image into a plurality of pixel regions; and a computation unit configured to detect a number of the pixel regions having white points and if the number of the pixel regions having the white points is greater than or equal to the preset threshold, determining that the fingerprint image is a false fingerprint.

In an embodiment of the present disclosure, the computation unit is further configured to determine that the fingerprint image is a true fingerprint if the number of the pixel regions having the white points is less than the preset threshold.

In an embodiment of the present disclosure, the apparatus of recognizing false fingerprints, the fingerprint image is divided into pixel regions. A number of the pixel regions having white points are computed to determine whether the fingerprint image is a false fingerprint to improve fingerprint recognition accuracy. Therefore, the fingerprint recognition of the present disclosure satisfies usage convenience and provides fingerprint password security for the user.

In order to achieve the above-mentioned objectives, an embodiment of a sixth aspect of the present disclosure provides a terminal device.

In the terminal device according to an embodiment of the present disclosure, the fingerprint image is divided into pixel regions. A number of the pixel regions having white points are computed and it is determined whether the fingerprint image is a false fingerprint to improve fingerprint recognition accuracy. Therefore, the fingerprint recognition of the present disclosure satisfies usage convenience and provides fingerprint password security for the user. The terminal device includes the apparatus of recognizing false fingerprints.

In order to achieve the above-mentioned objectives, an embodiment of a seventh aspect of the present disclosure provides a non-volatile computer storage media. The computer storage media stores at least one program executed by an apparatus and the at least one program includes acquiring a fingerprint image; matching the fingerprint image with pre-stored fingerprint templates; dividing the fingerprint image into a plurality of pixel regions if the fingerprint image matches with at least one of the pre-stored fingerprint templates; and computing a number of the pixel regions having white points, and determining whether the fingerprint image is successfully recognized or not.

In order to achieve the above-mentioned objectives, an embodiment of an embodiment of an eighth aspect of the present disclosure provides a non-volatile computer storage media, wherein the computer storage media stores at least one program executed by an apparatus performing the at least one program includes: acquiring a fingerprint image; dividing the fingerprint image into a plurality of pixel regions; and computing a number of the pixel regions having white points and if the number of the pixel regions having the white points is either greater than or equal to a preset threshold, determining that the fingerprint image is a false fingerprint.

In order to achieve the above-mentioned objectives, an embodiment of a ninth aspect of the present disclosure provides a terminal device, including at least one processor; a memory; at least one program ,wherein the memory stores at least one program executed by the at least one processor and the at least one program includes: acquiring a fingerprint image; matching the fingerprint image with pre-stored fingerprint templates; dividing the fingerprint image into a plurality of pixel regions if the fingerprint image matches with at least one of the pre-stored fingerprint templates; and computing a number of the pixel regions having the white points, to determine whether the fingerprint image is successfully recognized or not.

In order to achieve the above-mentioned objectives, an embodiment of a tenth aspect of the present disclosure provides a terminal device. The terminal device includes at least one processor; a memory; at least one program ,wherein the memory stores at least one program executed by the at least one processor and the at least one program includes acquiring a fingerprint image; dividing the fingerprint image into a plurality of pixel regions; and computing a number of the pixel regions having white points and if the number of the pixel regions having the white points is either greater than or equal to a preset threshold, determining that the fingerprint image is a false fingerprint.

### BRIEF DESCRIPTION OF THE DRAWINGS

The following embodiments refer to the accompanying drawings for exemplifying specific implementable embodiments of the present disclosure, wherein:
FIG. 1 is an illustrative flowchart of a method of recognizing fingerprints according to one embodiment of the present disclosure;
FIG. 2 is an illustrative structural diagram of an apparatus of recognizing fingerprints according to one embodiment of the present disclosure;
FIG. 3 is an illustrative flowchart of a method of recognizing false fingerprints according to one embodiment of the present disclosure;
FIG. 4 is an illustrative structural diagram of an apparatus of recognizing false fingerprints according to one embodiment of the present disclosure; and
FIG. 5 is an illustrative exemplary flowchart of a method of recognizing fingerprints according to one embodiment of the present disclosure.

### DETAILED DESCRIPTION OF THE PREFERRED EMBODIMENTS

The following embodiments refer to the accompanying drawings for exemplifying specific implementable embodiments of the present disclosure in a suitable computing environment, where similar numerals denote the same elements. It should be noted that the exemplary described embodiments are configured to describe and understand the present disclosure, but the present disclosure is not limited thereto.

In addition, the terms "first" and "second" are used for descriptive purposes only, and should not be taken to indicate or imply relative importance, or implicitly indicate the indicated number of technical features. Thus, by defining a "first", and a "second" features may explicitly or implicitly include one or more of the features. In the description of the present disclosure, a "plurality" means two or more, in particular, unless explicitly defined.

In a flowchart or otherwise described by any process or method descriptions can be understood that the representation includes one or more for implementing specific logical functions or steps in the process of the executable instructions of a code module, fragments or portions of the present disclosure. The scope of the embodiments include additional implementation, which may not be shown or discussed order, according to the related functions in a substantially simultaneous manner or in a reverse order, to perform a function, which is at least one embodiment of the present disclosure to those skilled in the art will be appreciated.

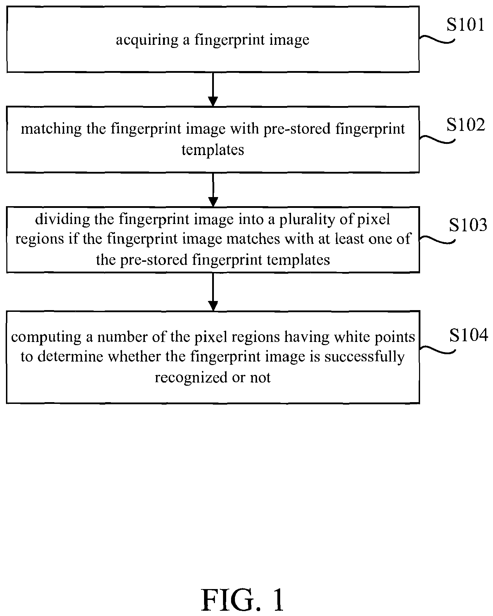

FIG. 1 is an illustrative flowchart of a method of recognizing fingerprints according to one embodiment of the present disclosure. As shown in FIG. 1, in at least one embodiment, the method of recognizing fingerprints includes the following blocks.

In block S101, a fingerprint image is acquired.

In at least one embodiment, when users perform a fingerprint recognition function using terminal devices, fingerprint reader devices acquire user fingerprint image inputs. For example, when a fingerprint is used to unlock a display screen or perform a mobile payment procedure, at least one fingerprint reader device, such as an optical fingerprint acquisition apparatus, a heat-sensitive sensor, or a radio frequency sensor, acquires user fingerprint image input.

In block S102, the fingerprint image is matched with pre-stored fingerprint templates.

In at least one embodiment, a terminal device pre-stores fingerprint templates for the fingerprint recognition. The acquired fingerprint image matches with at least one of the pre-stored fingerprint templates in the terminal device to identify whether the acquired fingerprint image is a legitimate user fingerprint. Fingerprint recognition includes extracting fingerprint features, storing fingerprint feature data, and comparing fingerprint feature data. In other words, an original fingerprint image is processed to enhance clarity of the fingerprint image after the original fingerprint image is acquired. A plurality of fingerprint features of the fingerprint image are extracted and stored. The fingerprint features of the fingerprint image are matched with a plurality of fingerprint features of at least one of the pre-stored fingerprint templates in the terminal device. If a number of the fingerprint features of the fingerprint image that matches with fingerprint features of at least one of the pre-stored fingerprint templates is greater than or equal to a preset threshold, the fingerprint image matches with at least one of the pre-stored fingerprint templates. If a number of the fingerprint features of the fingerprint image that matches with fingerprint features of at least one of the pre-stored fingerprint templates is less than the preset threshold, the fingerprint image recognition fails.

In block S103, if the fingerprint image matches with at least one of the pre-stored fingerprint templates, the fingerprint image is divided into a plurality of pixel regions.

In at least one embodiment in related art, when a fingerprint mold receives a false fingerprint, various white points of the false fingerprint are inevitably left on the fingerprint mold. It should be noted that a true fingerprint has no white point. After the fingerprint image matches with at least one of the pre-stored fingerprint templates, the fingerprint image is divided into a plurality of sub-images (i.e., pixel regions). In at least one embodiment, it is determined that the fingerprint image is a false fingerprint by determining whether the fingerprint image includes white points within the pixel regions.

In block S104, a number of the pixel regions having white points are computed, to determine whether the fingerprint image is successfully recognized or not.

In at least one embodiment, the pixel regions are scanned to identify the number of the white points on the pixel regions. If a white point area is greater than an area threshold, white points exist in the pixel regions. It is determined whether a number of the pixel regions having white points is greater than a preset threshold. If the number of the pixel regions having white points is less than the preset threshold, the fingerprint image is successfully recognized to regard the fingerprint image as a true fingerprint. If the number of the pixel regions having white points is greater than or equal to the preset threshold, the fingerprint image recognition fails to regard the fingerprint image as a false fingerprint.

When the fingerprint image is a true fingerprint, a display screen is unlocked or a user can perform a mobile payment procedure. When the fingerprint image is a false fingerprint, the terminal device makes no response.

In at least one embodiment, a method of recognizing fingerprints is performed to match an acquired fingerprint image with the pre-stored fingerprint templates in the terminal device. If the fingerprint image matches with at least one of the pre-stored fingerprint templates, the fingerprint image is divided into pixel regions. A number of the pixel regions having white points are computed to determine whether the fingerprint image is a false fingerprint to improve fingerprint recognition accuracy. Therefore, the fingerprint recognition of the present disclosure satisfies usage convenience and provides fingerprint password security for the user.

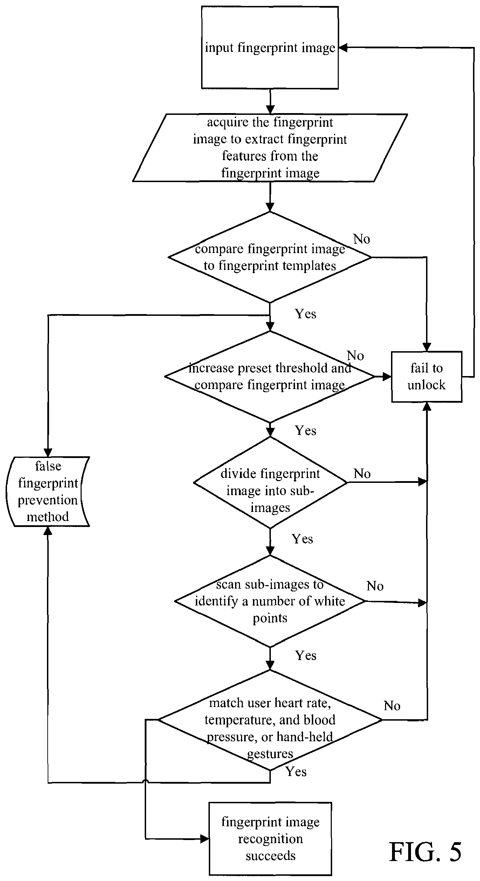

FIG. 5 is an illustrative exemplary flowchart of a method of recognizing fingerprints according to one embodiment of the present disclosure.

As shown in FIG. 5, when a user inputs a fingerprint image to the terminal device to unlock the display screen, the terminal device acquires the fingerprint image to extract fingerprint features from the fingerprint image.

Afterwards, the fingerprint features of the fingerprint image are compared to the fingerprint features of the fingerprint templates. If a number of the fingerprint features of the fingerprint image that matches with fingerprint features of the fingerprint templates is less than a preset threshold, the fingerprint image recognition fails to unlock the display screen.

If the number of the fingerprint features of the fingerprint image that matches with fingerprint features of the fingerprint templates is greater than or equal to the preset threshold, the preset threshold is increased and the fingerprint features of the fingerprint image are compared again. In other words, the fingerprint features of the fingerprint image are compared to the fingerprint features of the fingerprint templates.

If a number of the fingerprint features of the fingerprint image that matches with fingerprint features of the fingerprint templates is less than the increased preset threshold, the fingerprint image recognition fails to unlock the display screen. If the number of the fingerprint features of the fingerprint image that matches with fingerprint features of the fingerprint templates is greater than or equal to the increased preset threshold, the fingerprint image is divided into a plurality of sub-images. The sub-images are scanned to identify whether the fingerprint image includes white points thereon.

If a number of the white points is greater than or equal to a white point threshold, the fingerprint image recognition fails to unlock the display screen. If the number of the white points is less than a white point threshold, the terminal device further detects parameter information, such as a user heart rate, temperature, blood pressure, and hand-held gestures. If at least one of the user heart rate, temperature, and blood pressure exceeds a user normal range, or the hand-held gestures does not match with preset hand-held gestures, the fingerprint image recognition fails to unlock the display screen. If the user heart rate, temperature, and blood pressure keeps in a user normal range, and hand-held gestures match with preset hand-held gestures, the fingerprint image is successfully recognized to unlock the display screen.

In at least one embodiment, a method of recognizing fingerprints matches fingerprint features of the fingerprint image with fingerprint features of the fingerprint templates by using many user parameter information to determine whether the fingerprint image is true or false. Therefore, the present disclosure improves recognition accuracy of the false fingerprints and increases fingerprint safety.

In order to implement the above embodiments, the present disclosure further provides an apparatus of recognizing fingerprints.

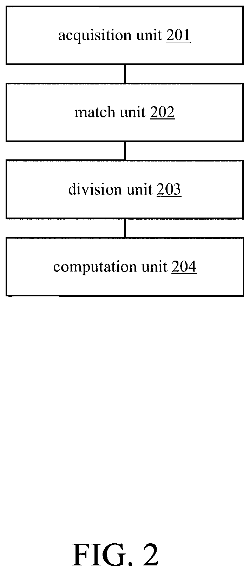

FIG. 2 is an illustrative structural diagram of an apparatus of recognizing fingerprints according to one embodiment of the present disclosure.

As shown in FIG. 2, the apparatus of recognizing fingerprints includes an acquisition unit 201, a match unit 202, a division unit 203 and a computation unit 204.

The acquisition unit 201 is configured to acquire fingerprint images. In at least one embodiment, when a user uses a terminal device to recognize a fingerprint for unlocking a display screen or performing a mobile payment procedure by the fingerprint, the acquisition unit 201 acquires a fingerprint image input by the user. For example, the acquisition unit 201 is selected from the group consisting of an optical fingerprint acquisition apparatus, a heat-sensitive sensor, and a radio frequency sensor.

The match unit 202 is configured to match the fingerprint image with pre-stored fingerprint templates. In at least one embodiment, a terminal device pre-stores the fingerprint templates for the fingerprint recognition. The match unit 202 matches the acquired fingerprint image with the pre-stored fingerprint templates in the terminal device to identify whether the acquired fingerprint image is a legitimate user fingerprint.

In at least one embodiment, fingerprint recognition includes processes of extracting fingerprint features, storing fingerprint feature data, and comparing the fingerprint feature data. In other words, an original fingerprint image is processed to enhance clarity of fingerprint image when acquiring the original fingerprint image. A plurality of fingerprint features of the fingerprint image are extracted and stored. The match unit 202 matches the fingerprint features of the fingerprint image with pre-stored fingerprint templates in the terminal device. If a number of the fingerprint features of the fingerprint image that matches with fingerprint features of at least one of the pre-stored fingerprint templates is greater than or equal to a preset threshold, the match unit 202 determines that the fingerprint image matches with at least one of the pre-stored fingerprint templates. If a number of the fingerprint features of the fingerprint image that matches with fingerprint features of at least one of the pre-stored fingerprint templates is less than the preset threshold, the match unit 202 determines that the fingerprint image recognition fails.

The division unit 203 is configured to divide the fingerprint image into a plurality of pixel regions if the fingerprint image matches with at least one of the pre-stored fingerprint templates. After the match unit 202 matches the fingerprint image with at least one of the pre-stored fingerprint templates, the fingerprint image is divided into the sub-images (i.e., pixel regions). In at least one embodiment, the computation unit 204 determines that the fingerprint image is a false fingerprint by determining whether the fingerprint image includes white points within the pixel regions.

The computation unit 204 is configured to compute a number of the pixel regions having white points to determine whether the fingerprint image is successfully recognized or not. The computation unit 204 scans the pixel regions to identify the number of the white points on the pixel regions. If a white point area is greater than an area threshold, white points exist in the pixel regions. The computation unit 204 determines whether a number of the pixel regions having white points is greater than a preset threshold. If the number of the pixel regions having white points is less than the preset threshold, the computation unit 204 determines that the fingerprint image is successfully recognized to regard the fingerprint image as a true fingerprint. If the number of the pixel regions having white points is greater than or equal to the preset threshold, the computation unit 204 determines that the fingerprint image recognition fails to regard the fingerprint image as a false fingerprint.

When the fingerprint image is a true fingerprint, a display screen unlocks or a user can perform a mobile payment procedure. When the fingerprint image is a false fingerprint, the terminal device makes no response.

In at least one embodiment, an apparatus of recognizing fingerprints is configured to match an acquired fingerprint image with the pre-stored fingerprint templates in the terminal device. If the fingerprint image matches with at least one of the pre-stored fingerprint templates, the fingerprint image is divided into pixel regions. A number of the pixel regions having white points are computed to determine whether the fingerprint image is a false fingerprint, so as to improve fingerprint recognition accuracy. Therefore, the fingerprint recognition of the present disclosure satisfies usage convenience and provides fingerprint password security for the user.

In order to implement the above embodiments, the present disclosure further provides a terminal device including an apparatus of recognizing fingerprints.

In at least one embodiment, the terminal device is configured to match an acquired fingerprint image with the pre-stored fingerprint templates in the terminal device. If the fingerprint image matches with at least one of the pre-stored fingerprint templates, the fingerprint image is divided into pixel regions. A number of the pixel regions having white points are computed to determine whether the fingerprint image is a false fingerprint, so as to improve fingerprint recognition accuracy. Therefore, the fingerprint recognition of the present disclosure satisfies usage convenience and provides fingerprint password security for the user.

In order to implement the above embodiments, the present disclosure further provides a method of recognizing false fingerprints.

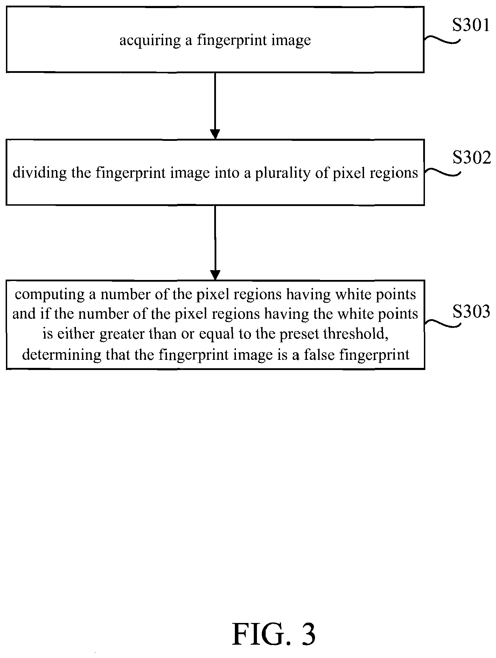

FIG. 3 is an illustrative flowchart of a method of recognizing false fingerprints according to one embodiment of the present disclosure.

As shown in FIG. 3, the method of recognizing false fingerprints includes the following blocks.

In block S301, a fingerprint image is acquired.

In at least one embodiment, when a user performs a fingerprint recognition using a terminal device. For example, a fingerprint is used to unlock a display screen or perform a mobile payment procedure by fingerprint reader devices, such as an optical fingerprint acquisition apparatus, a heat-sensitive sensor, and a radio frequency sensor to acquire user input fingerprint images.

In block S302, the fingerprint image is divided into a plurality of pixel regions.

In at least one embodiment, when a fingerprint mold receives a false fingerprint, some white points of the false fingerprint are inevitably left on the fingerprint mold in related art. It should be noted that a true fingerprint has no white point. The fingerprint image is divided into a plurality of sub-images (i.e., pixel regions). In at least one embodiment, it is determined that the fingerprint image is a false fingerprint by determining whether the fingerprint image includes white points within the pixel regions.

In block S303, a number of the pixel regions having white points are computed and if the number of the pixel regions having white points is greater than or equal to the preset threshold, the fingerprint image is a false fingerprint.

In at least one embodiment, when a number of the pixel regions having white points are computed and if the number of the pixel regions having white points is greater than or equal to the preset threshold, the fingerprint image is a false fingerprint. If the number of the pixel regions having white points is less than the preset threshold, the fingerprint image is a true fingerprint.

In at least one embodiment of a method of recognizing false fingerprints, the fingerprint image is divided into pixel regions. A number of the pixel regions having white points are computed to determine whether the fingerprint image is a false fingerprint, so as to improve fingerprint recognition accuracy. Therefore, the fingerprint recognition of the present disclosure satisfies usage convenience and provides fingerprint password security for the user.

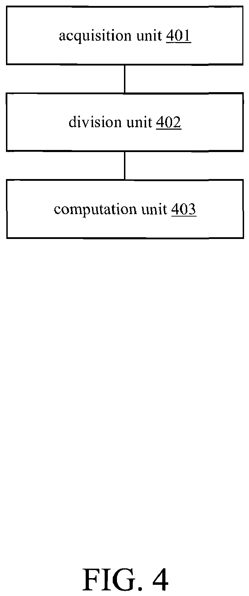

FIG. 4 is an illustrative structural diagram of an apparatus of recognizing false fingerprints according to one embodiment of the present disclosure.

As shown in FIG. 4, the apparatus of recognizing false fingerprints includes an acquisition unit 401, a division unit 402 and a computation unit 403.

The acquisition unit 401 is configured to acquire fingerprint images. In at least one embodiment, when a user uses a terminal device to recognize a fingerprint for unlocking a display screen or performing a mobile payment procedure by the fingerprint, the acquisition unit 401 acquires a fingerprint image input by the user. For example, the acquisition unit 401 is selected from the group consisting of an optical fingerprint acquisition apparatus, a heat-sensitive sensor, and a radio frequency sensor.

The division unit 402 is configured to divide the fingerprint image into a plurality of pixel regions if the fingerprint image matches with at least one of the pre-stored fingerprint templates. The division unit 402 divides the fingerprint image into the sub-images (i.e., pixel regions). In at least one embodiment, the computation unit 402 determines that the fingerprint image is a false fingerprint by determining whether the fingerprint image includes white points within the pixel regions.

The computation unit 403 is configured to compute a number of the pixel regions having white points, and if the number of the pixel regions having white points is greater than or equal to the preset threshold, the fingerprint image is a false fingerprint.

In at least one embodiment, the computation unit 403 scans the pixel regions to identify the number of the pixel regions having white points. If a white point area is greater than an area threshold, white points exist in the pixel regions.

Furthermore, the computation unit 403 determines whether a number of the pixel regions having white points is greater than a preset threshold. If the number of the pixel regions having white points is less than the preset threshold, the fingerprint image is successfully recognized to regard the fingerprint image as a true fingerprint. If the number of the pixel regions having white points is greater than or equal to the preset threshold, the fingerprint image recognition fails to regard the fingerprint image as a false fingerprint.

In at least one embodiment of the apparatus of recognizing false fingerprints, the fingerprint image is divided into pixel regions. A number of the pixel regions having white points are computed to determine whether the fingerprint image is a false fingerprint to improve fingerprint recognition accuracy. Therefore, the fingerprint recognition of the present disclosure satisfies usage convenience and provides fingerprint password security for the user.

In order to implement the above embodiments, the present disclosure further provides a terminal device including an apparatus of recognizing false fingerprints.

In at least one embodiment of the terminal device, the fingerprint image is divided into pixel regions. A number of the pixel regions having white points are computed to determine whether the fingerprint image is a false fingerprint to improve fingerprint recognition accuracy. Therefore, the fingerprint recognition of the present disclosure satisfies usage convenience and provides fingerprint password security for the user.

It should be understood that portions of the present disclosure may be implemented in hardware, software, firmware, or combinations thereof. In the at least one embodiment described above, a number of the blocks or methods may be stored in a memory and are executed by software or firmware implemented in a suitable instruction execution system. If the software or firmware implemented, for example, in hardware, as in another at least one embodiment, the implement in the related art may be used in any one of the following techniques or combinations thereof. The techniques includes a discrete logic circuit of logic gate circuits to implement logic functions on data signals, an application specific integrated circuit having appropriate combinational logic gate circuits, a programmable gate array (PGA), and a field programmable gate array (FPGA).

In the present disclosure, unless otherwise explicitly specified or limited, the terms "installed", the "connected", and "connection" should be, for example, a fixed connection, a removable connection, integrally connected. These terms may be a mechanical connection, and an electrical connection. Moreover, these terms can be directly attached, be indirectly connected through an intermediate medium, and may be internally communicated with two components or the interaction relationship between two components. For persons skilled in the art can understand the specific meaning of the terms in the present disclosure.

In the present disclosure, reference terms "one embodiment", "some embodiments", "example", "a specific example", or "some examples" in connection with the embodiment or example are described by specific features, the structure, material, or characteristic which is included in at least one embodiment of the disclosure or examples in this specification. The schematic representations of the terms are not necessarily to the same embodiment or example. Furthermore, the particular features, structures, the material, or characteristics may be any one or more of the embodiments or examples combined in a suitable manner. In addition, in the case of not mutually inconsistent, persons skilled in the art can combine or assemble different embodiments or examples.

As is understood by a person skilled in the art, the foregoing preferred embodiments of the present disclosure are illustrative rather than limiting of the present disclosure. It is intended that they cover various modifications and similar arrangements be included within the spirit and scope of the present disclosure, the scope of which should be accorded the broadest interpretation so as to encompass all such modifications and similar structures.

## Claims

1. A method of recognizing fingerprints, **characterized in that** the method comprises:
acquiring a fingerprint image;
matching the fingerprint image with pre-stored fingerprint templates;
dividing the fingerprint image into a plurality of pixel regions if the fingerprint image matches with at least one of the pre-stored fingerprint templates; and
computing a number of the pixel regions having white points, and determining whether the fingerprint image is successfully recognized or not according to the number of the pixel regions having white points.

2. The method of recognizing fingerprints according to claim 1, **characterized in that** determining whether the fingerprint image is successfully recognized or not according to the number of the pixel regions having white points comprises:
determining whether the number of the pixel regions having the white points is greater than a preset threshold; and
determining that the fingerprint image is successfully recognized if the number of the pixel regions having the white points is less than the preset threshold.

3. The method of recognizing fingerprints according to any one of claims 1 to 2, **characterized in that** determining whether the number of the pixel regions having the white points is greater than a preset threshold comprises:
determining that fingerprint image recognition fails if the number of the pixel regions having the white points is either greater than or equal to a preset threshold.

4. The method of recognizing fingerprints according to any one of claims 1 to 3, **characterized in that** matching the fingerprint image with the pre-stored fingerprint templates comprises:
extracting a plurality of fingerprint features of the fingerprint image, and matching the fingerprint features of the fingerprint image with a plurality of fingerprint features of the pre-stored fingerprint templates; and
**characterized in that** matching the fingerprint image with the pre-stored fingerprint templates comprises:
matching the fingerprint image with the pre-stored fingerprint templates if a number of the fingerprint features of the fingerprint image that matches with the fingerprint features of at least one of the pre-stored fingerprint templates is either greater than or equal to a preset threshold.

5. The method of recognizing fingerprints according to any one of claims 1 to 4, **characterized in that**:
determining that fingerprint image recognition fails if the number of the fingerprint features of the fingerprint image that matches with the fingerprint features of at least one of the pre-stored fingerprint templates is less than the preset threshold.

6. An apparatus of recognizing fingerprints, **characterized in that** the apparatus comprises:
an acquisition unit configured to acquire a fingerprint image;
a match unit configured to match the fingerprint image with pre-stored fingerprint templates;
a division unit configured to divide the fingerprint image into a plurality of pixel regions if the fingerprint image matches with at least one of the pre-stored fingerprint templates; and
a computation unit configured to compute a number of the pixel regions having white points and determine whether the fingerprint image is successfully recognized or not.

7. The apparatus of recognizing fingerprints according to claim 6, **characterized in that** the computation unit is further configured to:
determine whether a number of the pixel regions having the white points is greater than a preset threshold; and
determine that the fingerprint image is successfully recognized if the number of the pixel regions having the white points is less than the preset threshold.

8. The apparatus of recognizing fingerprints according to any one of claims 6 to 7, **characterized in that** the computation unit is further configured to:
determine that fingerprint image recognition fails if the number of the pixel regions having the white points is either greater than or equal to the preset threshold.

9. The apparatus of recognizing fingerprints according to any one of claims 6 to 8, **characterized in that** the match unit is further configured to:
extract a plurality of fingerprint features of the fingerprint image, and match the fingerprint features of the fingerprint image with a plurality of fingerprint features of the pre-stored fingerprint templates; and
match the fingerprint image with the pre-stored fingerprint templates if a number of the fingerprint features of the fingerprint image that matches with the fingerprint features of at least one of the pre-stored fingerprint templates is either greater than or equal to a preset threshold.

10. The apparatus of recognizing fingerprints according to any one of claims 6 to 9, **characterized in that** the match unit is further configured to:
determine that fingerprint image recognition fails if a number of the fingerprint features of the fingerprint image that matches with the fingerprint features of at least one of the pre-stored fingerprint templates is less than the preset threshold.

11. A terminal device, **characterized in that** the terminal device comprises the apparatus of recognizing fingerprints according to any one of claims 6 to 10.

12. A method of recognizing false fingerprints, **characterized in that** the method comprises:
acquiring a fingerprint image;
dividing the fingerprint image into a plurality of pixel regions; and
computing a number of the pixel regions having white points and if the number of the pixel regions having the white points is either greater than or equal to the preset threshold, determining that the fingerprint image is a false fingerprint.

13. The method of recognizing false fingerprints according to claim 12, **characterized in that** computing a number of the pixel regions having white points further comprises:
determining that the fingerprint image is a true fingerprint if the number of the pixel regions having the white points is less than the preset threshold.

14. An apparatus of recognizing false fingerprints, **characterized in that** the apparatus comprises:
an acquisition unit configured to acquire a fingerprint image;
a division unit configured to divide the fingerprint image into a plurality of pixel regions; and
a computation unit configured to compute a number of the pixel regions having white points and if the number of the pixel regions having the white points is either greater than or equal to the preset threshold, determining that the fingerprint image is a false fingerprint.

15. The apparatus of recognizing false fingerprints according to claim 14, **characterized in that** the computation unit is further configured to:
determine that the fingerprint image is a true fingerprint if the number of the pixel regions having the white points is less than the preset threshold.

16. A terminal device, **characterized in that** the terminal device comprises the apparatus of recognizing false fingerprints according to any one of claims 14 to 15.

17. A non-volatile computer storage medium, wherein the non-volatile computer storage medium comprises the at least one program instruction executable by an apparatus and the at least one program instruction comprises:
acquiring a fingerprint image;
matching the fingerprint image with pre-stored fingerprint templates;
dividing the fingerprint image into a plurality of pixel regions if the fingerprint image matches with at least one of the pre-stored fingerprint templates; and
computing a number of the pixel regions having white points, to determine whether the fingerprint image is successfully recognized or not.

18. A non-volatile computer storage medium, wherein the non-volatile computer storage medium comprises the at least one program instruction executable by an apparatus and the at least one program instruction comprises:
acquiring a fingerprint image;
dividing the fingerprint image into a plurality of pixel regions; and
computing a number of the pixel regions having white points and if the number of the pixel regions having the white points is either greater than or equal to a preset threshold, determining that the fingerprint image is a false fingerprint.

19. A terminal device, comprising:
at least one processor;
a memory;
at least one program instruction, wherein the memory comprises the at least one program instruction executable by the at least one processor, and the at least one program instruction comprising:
acquiring a fingerprint image;
matching the fingerprint image with pre-stored fingerprint templates;
dividing the fingerprint image into a plurality of pixel regions if the fingerprint image matches with at least one of the pre-stored fingerprint templates; and
computing a number of the pixel regions having the white points, to determine whether the fingerprint image is successfully recognized or not.

20. A terminal device, comprising:
at least one processor;
a memory;
at least one program instruction, wherein the memory comprises the at least one program instruction executable by the at least one processor, and the at least one program instruction comprising:
acquiring a fingerprint image;
dividing the fingerprint image into a plurality of pixel regions; and
computing a number of the pixel regions having white points and if the number of the pixel regions having the white points is either greater than or equal to a preset threshold, determining that the fingerprint image is a false fingerprint.
